(19)

Europäisches Patentamt
European Patent Office
Office européen des brevets

(11) **EP 2 385 575 A1**

(12) **EUROPEAN PATENT APPLICATION**
published in accordance with Art. 153(4) EPC

(43) Date of publication:
**09.11.2011 Bulletin 2011/45**

(51) Int Cl.:
*H01M 10/44* (2006.01)    *H01M 10/42* (2006.01)
*H02J 7/00* (2006.01)    *H02J 7/02* (2006.01)

(21) Application number: **10828061.1**

(22) Date of filing: **19.10.2010**

(86) International application number:
**PCT/JP2010/006205**

(87) International publication number:
**WO 2011/055499 (12.05.2011 Gazette 2011/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2009 JP 2009255000**

(71) Applicant: **Panasonic Corporation
Kadoma-shi
Osaka 571-8501 (JP)**

(72) Inventor: **ASAKURA, Jun
Chuo-ku, Osaka-shi,
Osaka 540-6207 (JP)**

(74) Representative: **Schwabe - Sandmair - Marx
Patentanwälte
Stuntzstraße 16
81677 München (DE)**

(54) **BATTERY POWER SUPPLY DEVICE, AND BATTERY POWER SUPPLY SYSTEM**

(57)     A battery power source device includes a battery block configured by parallel-corinecting a plurality of series-circuits each constituted of a secondary battery, and a cut-off element which is operable to be in a cut-off state where a charging and discharging path of the secondary battery is cut off; a current limit value setting section which sets a current limit value representing an upper allowable limit of an entire current value as a current value of a current flowing through the battery block; and an available battery number detecting section which detects the number of cut-off elements which are not in the cut-off state, out of the plurality of cut-off elements included in the battery block, as the available battery number, In this arrangement, the current limit value setting section sets the current limit value so that the current limit value is decreased, as the available battery number detected by the available battery number detecting section is reduced.

FIG.1

EP 2 385 575 A1

## Description

## Technical Field

The invention relates to a battery power source device incorporated with a battery block constituted of parallel-connected secondary batteries, and a battery power source system incorporated with the battery power source device.

## Background Art

Conventionally, in a battery power source device for supplying electric power to a load circuit using secondary batteries, there has been widely used a battery block constituted of parallel-connected secondary batteries to secure an output current amount required by the load circuit.

In such a battery power source device, in the case where anomaly such as overcurrent or overheating has occurred in a part of the secondary batteries included in the battery block, charging and discharging of the battery block in the same manner as in a normally operated state may degrade the secondary batteries.

In view of the above, there has been known a technology configured such that upon detecting occurrence of anomaly of a part of the secondary batteries included in the secondary block, e.g. anomaly such as dropout or disconnection, a switching element or a protecting element is turned off to prohibit charging and discharging of the entirety of the battery power source device (see e.g. patent literatures 1 and 2).

However, in some cases, it is not preferable to prohibit charging and discharging of the entirety of the battery power source device upon detecting occurrence of anomaly in a part of the secondary batteries included in the battery block, as disclosed in the above technology.

For instance, in the case where a hybrid electric vehicle (HEV) incorporated with an engine and a motor is driven by the motor, the motor is driven by a discharging current supplied from a battery power source device to discharge the battery block. On the other hand, in the case where an output power from the engine is large as compared with the power required for driving the HEV, the HEV drives a power generator by a surplus engine output, thereby charging the battery block of the battery power source device. Further, the HEV uses the motor as a power generator at braking or decelerating the vehicle, thereby charging the battery block of the battery power source device by the regenerated electric power.

In the above arrangement, in the case where the battery power source device is used in e.g. an HEV, prohibiting charging and discharging of the battery power source device in response to detecting occurrence of anomaly in a part of the secondary batteries included in the battery block may result in stopping of the running vehicle, or may generate an overvoltage due to incapability of absorbing the electric power generated by the power generator or the regenerated electric power by the power generator.

## Citation List

## Patent Literature

Patent literature 1: JP 2008-27658A
Patent literature 2: JP 2008-71568A

## Summery of Invention

An object of the invention is to provide a battery power source device that enables to suppress degradation of secondary batteries without prohibiting charging and discharging of the entirety of the battery power source device, even if anomaly has occurred in a part of the secondary batteries included in a battery block, and to provide a battery power source system incorporated with the battery power source device.

A battery power source device according to an aspect of the invention includes a battery block configured by parallel-connecting a plurality of series-circuits each constituted of a secondary battery, and a cut-off element which is operable to be in a cut-off state where a charging and discharging path of the secondary battery is cut off; a current limit value setting section which sets a current limit value representing an upper allowable limit of an entire current value as a current value of a current flowing through the battery block; and an available battery number detecting section which detects the number of cut-off elements which are not in the cut-off state, out of the plurality of cut-off elements included in the battery block, as the available battery number. In this arrangement, the current limit value setting section sets the current limit value so that the current limit value is decreased, as the available battery number detected by the available battery number detecting section is reduced.

A battery power source system according to another aspect of the invention includes the battery power source device having the above arrangement, and an external device which charges and discharges the battery power source device. In this arrangement, the external device includes a load circuit which accepts supply of a discharging current from the battery block; a current supplying section which supplies a charging current to the battery block; and a charging and discharging control section which adjusts the discharging current to be supplied from the battery block to the load circuit, and the charging current to be supplied from the current supplying section to the battery block so that a current value of the current flowing through the battery block does not exceed the current limit value transmitted from the current controlling section.

**Brief Description of Drawings**

FIG. 1 is a block diagram showing an example of a battery power source system incorporated with a battery power device as a first embodiment of the invention,
FIG. 2 is a flowchart showing an example of an operation to be performed by the battery power source device shown in FIG. 1,
FIG. 3 is a block diagram showing an example of a configuration of a battery power source system as a second embodiment of the invention, and
FIG. 4 is a flowchart showing an example of an operation to be performed by a battery power source device shown in FIG. 3.

**Description of Embodiments**

In the following, embodiments of the invention are described referring to the accompanying drawings. Elements having the same reference numerals throughout the drawings have the same arrangements, and repeated description thereof is omitted herein.

(First Embodiment)

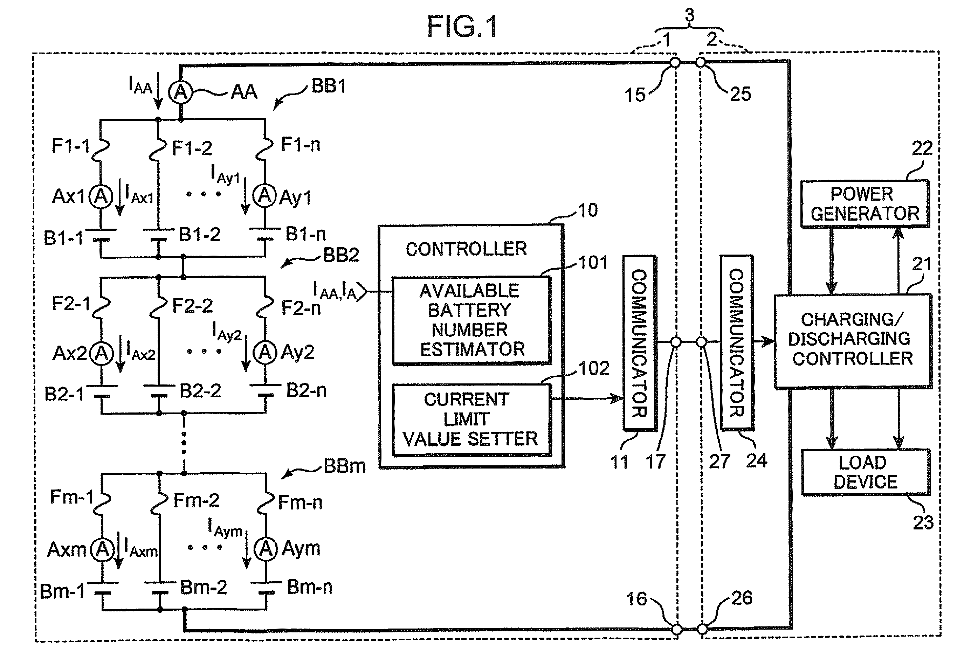

FIG. 1 is a block diagram showing an example of a battery power source system incorporated with a battery power source device as the first embodiment of the invention.
The battery power source system 3 shown in FIG. 1 is configured by connecting a battery power source device 1 and an external device 2. The battery power source device 1 shown in FIG. 1 is provided with m (e.g. ten) battery blocks BB1 to BBm, an entire current detector AA, a controller 10, a communicator 11, and connection terminals 15, 16, 17.
The m battery blocks BB1 to BBm are series-connected. The plus terminal of a series circuit constituted of the battery blocks BB1 to BBm is connected to the connection terminal 15 via the entire current detector AA. Further, the minus terminal of the series circuit constituted of the battery blocks BB1 to BBm is connected to the connection terminal 16. Further, the connection terminal 17 is connected to the communicator 11.
In FIG. 1, the battery blocks BB1 to BBm are connected by a single conductive wire. Alternatively, the battery blocks BB1 to BBm may be connected by plural conductive wires.
The external device 2 shown in FIG. 1 is provided with a charging and discharging controller 21, a power generator 22 (a current supplying section), a load device 23 (a load circuit), a communicator 24, and connection terminals 25, 26, 27. The connection terminals 25, 26 are connected to the charging and discharging controller 21, and the connection terminal 27 is connected to the charging and discharging controller 21 via the communicator 24. The power generator 22 and the load device 23 are connected to the charging and discharging controller 21.
When the battery power source device 1 and the external device 2 are connected to each other, the connection terminals 15, 16, 17, and the connection terminals 25, 26, 27 are connected to each other, respectively.
Since the battery blocks BB1 to BBm have the same construction as each other, the construction of the i-th battery block BBi is described, as a representative of the battery blocks BB1 to BBm.
The battery block BBi is constructed by parallel-connecting n (e.g. fifty) series circuits each constituted of a fuse F as an example of a cut-off element, and a secondary battery B. Hereinafter, in the battery block BBi shown in FIG. 1, a fuse F and a secondary battery B included in each series circuit are respectively denoted as the fuse Fi-j and the secondary battery Bi-j where j denotes the ordinal number from the left side in FIG. 1.
The first series circuit in the battery block BBi is constructed by series-connecting a fuse Fi-1, a first individual current detector Axi, and a secondary battery Bi-1. The j-th series circuit in the battery block BBi, whose ordinal number j (where j is 2 to (n-1)) is constructed by series-connecting a fuse Fi-j and a secondary battery Bi-j. The n-th series circuit in the battery block BBi is constructed by series-connecting a fuse Fi-n, a second individual current detector Ayi, and a secondary battery Bi-n.

Hereinafter, the battery blocks BB1 to BBm are generically called as battery blocks BB, the fuses Fi-1 to Fi-n (where i is the battery block number, and i-1 to m) are generically called as fuses F, the secondary batteries Bi-1 to Bi-n (where i is the battery block number, and i=1 to m) are generically called as secondary batteries B, the first individual current detectors Ax1 to Axm are generically called as first individual current detectors Ax, and the second individual current detectors Ay1 to Aym are generically called as second individual current detectors Ay.

Referring to FIG. 1, the first series circuit includes the first individual current detector Axi, and the n-th series circuit includes the second individual current detector Ayi. Alternatively, the first and second individual current detectors may be included in any numbered series circuit. The embodiment is not limited to an example, wherein the first and second individual current detectors are disposed between a fuse F and a secondary battery B. In the embodiment, two individual current detectors are provided in a battery block BB. Alternatively, the second individual current detector may be omitted, or three or more individual current detectors may be provided.

The entire current detector AA, the first individual current detector Ax, and the second individual current detector Ay are each constituted of e.g. a hall element, a shunt resistor, or a current transformer. A voltage loss is generated in a shunt resistor or a current transformer. Therefore, use of a shunt resistor or a current transformer as the first individual current detector Ax and the second individual current detector Ay which are connected only to a part of each secondary battery B which is connected in parallel in a battery block BB may cause imbalance in the voltage (current) to be applied to each secondary battery B.

On the other hand, a voltage loss of a hall element is smaller than a voltage loss of a shunt resistor or a current transformer. Accordingly, use of a hall element as the first individual current detector Ax and the second individual current detector Ay suppresses imbalance in the voltage (current) to be applied to each secondary battery B. In view of the above, a hall element is preferable as the first individual current detector Ax and the second individual current detector Ay.

The controller 10 is configured to acquire a current value of a current flowing through the entire current detector AA, the first individual current detector Ax, and the second individual current detector Ay by converting a voltage generated in the entire current detector AA, the first individual current detector Ax, and the second individual current detector Ay into a digital value by an analog-to-digital converter.

With the above configuration, the entire current detector AA detects an entire current value $I_{AA}$ of a current flowing through the battery blocks BB1 to BBm, the first individual current detector Axi detects a first individual current value $I_{Axi}$ of a current flowing through the first series circuit from the left side in the battery block BBi, and the second individual current detector Ayi detects a second individual current value $I_{Ayi}$ of a current flowing through the n-th series circuit from the left side in the battery block BBi.

Various types of secondary batteries may be used as the secondary battery B, such as a lithium-ion secondary battery or a nickel-hydrogen secondary battery. The secondary battery B may be an electric cell, or a battery set constructed by connecting electric cells in series, in parallel, or by combination of series and parallel connections.

A fuse F is configured to cut off a current flowing through a secondary battery B, in the case where anomaly has occurred, and the fuse F is brought to a cut-off state resulting from e.g. short-circuiting of the secondary battery B which is series-connected to the fuse F. A protecting element such as PTC (Positive Temperature Coefficient) may be used as a cut-off element, in place of the fuse F.

The communicators 11, 24 are a communications interface circuit. Connecting between the connection terminal 17 and the connection terminal 27 enables transmitting or receiving data between the communicators 11 and 24. Data is transmittable and receivable between the controller 10, and the charging and discharging controller 21 via the communicators 11, 24. In this embodiment, the communicator 11 corresponds to an example of a current controlling section.

The controller 10 is constituted of a CPU (Central Processing Unit) which executes a predetermined computation processing, an ROM (Read Only Memory) which stores a predetermined control program, an RAM (Random Access Memory) which temporarily stores data, an analog-to-digital converter, and peripheral circuits thereof. The controller 10 functions as an available battery number estimator 101 and a current limit value setter 102 by executing e.g. a control program stored in the ROM.

Here, the entire current detector AA, the first individual current detector Axi, the second current detector Ayi, and the available battery number estimator 101 constitute an example of an available battery number detecting section.

The available battery number estimator 101 uses the first individual current value $I_{Axi}$ detected by the first individual current detector Axi, as an individual current value $I_{Ai}$ for the battery block BBi (where i is 1 to m). Further, the available battery number estimator 101 calculates a value obtained by dividing the entire current value $I_{AA}$ detected by the entire current detector AA with the individual current value $I_{Ai}$ and rounding off the quotient derived from the division to e.g. the closest whole number, as an available battery number ENi. The available battery number ENi represents the number of fuses that have not been cut off (i.e. not disconnected), in other words, are not in a cut-off state, out of the fuses Fi-1 to Fi-n in the battery block BBi.

Further, in the case where the first individual current value $I_{Axi}$ detected by the first individual current detector Axi is substantially zero, the available battery number estimator 101 uses the second individual current value $I_{A}yi$ detected by the second individual current detector Ayi, as the individual current value $I_{Ai}$. Further, the available battery number estimator 101 calculates a value obtained by dividing the entire current value $I_{AA}$ detected by the entire current detector AA with the individual current value $I_{Ai}$ and rounding off the quotient derived from the division to e.g. the closest whole number, as the available battery number ENi.

The expression "substantially zero" not only indicates perfect zero but also includes a current range corresponding to detection error of a current to be detected by the first individual current detector Axi.

The current limit value setter 102 sets a current limit value Iu indicating an allowable upper limit of a current flowing through a battery block BB. Specifically, in the case where none of the fuses F included in a certain battery block is cut off, an upper limit of a current with which the battery block is chargeable or dischargeable is set in advance as a standard current limit value Is.

The standard current limit value Is may differ between a charging time and a discharging time. Further alternatively, the standard current limit value Is may be changed depending on a state of charge (SOC) or a temperature of a battery.

For instance, since degradation is likely to progress at a charging time, as compared with a discharging time in a high-temperature condition, the standard current limit value Is (charging) to be used at the charging time may be set to a value smaller than the standard current limit value Is (discharging) to be used at the discharging time.

Further alternatively, the battery power source device may be configured such that the standard current limit value Is (charging) to be used at a charging time is approximated to zero, as the SOC of the battery is increased and approaches a fully charged state; and the standard current limit value Is (discharging) to be used at a discharging time is approximated to zero, as the SOC of the battery is decreased and approaches an over-discharged state.

The current limit value setter 102 selects a minimum value out of the available battery numbers EN1 to ENm of the battery blocks BB1 to BBm, as an available battery number ENmin. Then, the current limit value setter 102 calculates and sets the current limit value Iu, based on the following equation (1), and outputs a calculation result to the communicator 11.

$$Iu = Is \times ENmin/n \qquad \ldots (1)$$

In the equation (1), ENmin/n corresponds to an available battery ratio.

The communicator 11 transmits the current limit value Iu outputted from the current limit value setter 102 to the charging and discharging controller 21 via the communicator 24 so that the charging and discharging controller 21 controls the entire current value $I_{AA}$ of a current flowing through the battery block BB not to exceed the current limit value Iu.

Next, the external device 2 is described. The power generator 22 is e.g. a photovoltaic power generator (a photovoltaic battery), or a power generator to be driven by natural energy such as wind power or water power, or an artificial power such as an engine. The charging and discharging controller 21 may be connected to e.g. a commercial power source, in place of the power generator 22.

The load device 23 is one of various loads to be driven by electric power supplied from the battery power source device 1, and may be a motor or a load device to be backed up.

The charging and discharging controller 21 charges the battery blocks BB1 to BBm of the battery power source device 1 with surplus electric power from the power generator 22 or regenerated electric power generated in the load device 23. Further, the charging and discharging controller 21 supplies a deficiency of electric power from the battery blocks BB1 to BBm of the battery power source device 1 to the load device 23, in the case where the electric power required by the load device 23 exceeds the output of the power generator 22 resulting from a sharp increase in the current to be consumed by the load device 23, or lowering of the electricity generated in the power generator 22.

Further, the charging and discharging controller 21 receives the current limit value Iu from the current limit value setter 102 via the communicators 11, 24. Upon receiving the current limit value Iu, the charging and discharging controller 21 controls the charging/discharging current value of the battery blocks BB1 to BBm so that the entire current value $I_{AA}$ to be used in charging or discharging the battery blocks BB1 to BBm does not exceed the current limit value Iu as described above.

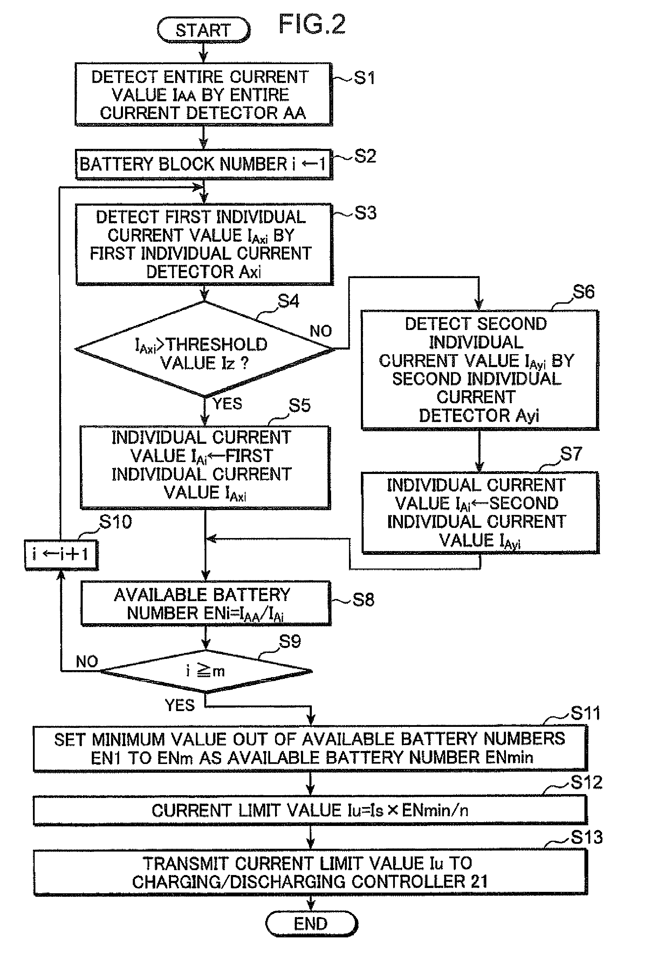

Next, an operation to be performed by the battery power source system 3 having the above configuration is described. FIG. 2 is a flowchart showing an example of an operation to be performed by the battery power source device 1 shown in FIG. 1. First of all, in the case where anomaly has not occurred in each secondary battery B of the battery blocks BB1 to BBm, and none of the fuses F is not cut off (melted down), the current limit value setter 102 sets the standard current limit value Is as an initial value of the current limit value Iu, and notifies the charging and discharging controller 21 of the set current limit value Iu.

By performing the above operation, the charging and discharging controller 21 controls the absolute value of the entire current value $I_{AA}$ of a current flowing through the battery blocks BB1 to BBm not to exceed the standard current limit value Is.

Next, in Step S1, the entire current detector AA detects the entire current value $I_{AA}$. Then, the available battery number estimator 101 substitutes 1 into the variable i indicating the ordinal number of the battery block BB (Step S2).

Then, the first individual current detector Axi in the i-th battery block BB detects the first individual current value $I_{Axi}$ (Step S3). Then, the available battery number estimator 101 compares between the first individual current value $I_{Axi}$ and a threshold value Iz (Step S4). The threshold value Iz is a determination threshold value for use in determining whether the first individual current value $I_{Axi}$ is substantially zero. For instance, a value including a certain range corresponding to detection error of a current to be detected by the first individual current detector Axi is set in advance as the threshold value Iz.

Then, if it is detected that the first individual current value $I_{Axi}$ exceeds the threshold value Iz, in other words, the first individual current value $I_{Axi}$ is not zero (YES in Step S4), the available battery number estimator 101 sets the first individual current value $I_{Axi}$ as an individual current value $I_{Ai}$ (Step S5).

If, on the other hand, it is detected that the first individual current value $I_{Axi}$ is not larger than the threshold value Iz, in other words, if the first individual current value $I_{Axi}$ is substantially zero (NO in Step S4), it is conceived that the fuse Fi-1 is cut-off, and a current does not flow through the secondary battery Bi-1. In this case, it is impossible to estimate the available battery number ENi based on the first individual current value $I_{Axi}$.

Then, the second individual current detector Ayi in the i-th battery block BB detects the second individual current value $I_{Ayi}$ (Step S6). Then, the available battery number estimator 101 sets the second individual current value $I_{Ayi}$ as an individual current value $I_{Ai}$ (Step S7).

By performing the above operation, even if the fuse Fi-1 which is series-connected to the first individual current detector Axi is cut off, it is possible to estimate the available battery number ENi of the i-th battery block BB.

Next, the available battery number estimator 101 calculates the available battery number ENi of the i-th battery block BB by dividing the entire current value $I_{AA}$ with the individual current value $I_{Ai}$ and rounding off the quotient derived by the division to e.g. the closest whole number (Step S8). Specifically, the entire current value $I_{AA}$ of a current flowing through the battery block BBi is substantially uniformly distributed to each secondary battery Bi whose fuse F has not been cut off, and the current value of one of the distributed currents is set as the individual current value $I_{Ai}$. Thus, it is possible to calculate the available battery number ENi by dividing the entire current value $I_{AA}$ with the individual current value $I_{Ai}$.

Next, the available battery number estimator 101 compares between the variable i and the battery block number m (Step S9). If the variable i is smaller than the battery block number m (NO in Step S9), the variable i is incremented by one to calculate the available battery number ENi of the next battery block BB (Step S10), and Steps S3 to S9 are repeated.

Then, if the variable i is equal to or larger than the battery block number m (YES in Step S9), the determination result means that the available battery numbers EN1 to ENm have been calculated for all the battery blocks BB. Then, the routine proceeds to Step S11.

In Step S11, the available battery number estimator 101 sets the minimum value out of the available battery numbers EN1 to ENm, as an available battery number ENmin. Setting the current limit value Iu based on the available battery number ENmin enables to set the current limit value Iu suitable for a battery block which has a largest number of fuses F which have been cut off, and accordingly, which is chargeable/dischargeable with a current of a smallest current value.

Next, the current limit value setter 102 calculates the current limit value Iu using the equation (1) (Step S12). By the equation (1), the current limit value Iu is set to such a value that the current limit value Iu is reduced, as the available battery number ENmin detected by the available battery number estimator 101 is decreased.

Specifically, by the equation (1), it is possible to set the current limit value Iu in such a manner that a current value of a current flowing through one of the secondary batteries Bi1 to Bin in the battery block BBi, in the case where a current of the standard current limit value Is flows through the battery block BBi in a state that none of the fuses F is cut off, does not exceed a current value of a current flowing through a secondary battery B which is series-connected to a fuse F which is not cut off, in the case where one or more fuses F are cut off.

Next, the current limit value Iu is outputted to the communicator 11 by the current limit value setter 102, and the communicator 11 transmits the current limit value Iu to the charging and discharging controller 21 via the communicator 24 (Step S13).

By performing the above operation, the charging and discharging controller 21 prevents the current value of a current flowing through the battery blocks BB1 to BBm of the battery power source device 1 from exceeding the current limit value Iu. Thus, even when a part of the fuses F included in the battery block BB is cut off, and a part of the secondary batteries B is disconnected resulting from cutting off of the part of the fuses F, this reduces likelihood which may resultantly increase a current flowing through the rest of the secondary batteries B, and degrade the rest of the secondary batteries B.

In this embodiment, there has been described an example, in which a plurality of battery blocks BB are series-connected. Alternatively, the battery block BB may be a single battery block. In the modification, Steps S9, S10, S11 may be omitted, and the available battery number ENi obtained in Step S8 may be used in place of the available battery number ENmin.

Further, the second individual current detector Ay is not necessarily required. Only the first individual current detector Ax may be used, and Steps S4, S6, S7 may be omitted. However, it is desirable to provide the second individual current detector Ay and execute Steps S4, S6, S7, because the above arrangement enables to calculate the available battery number, even if a fuse F which is series-connected to the first individual current detector Ax is cut off.

In the embodiment, there has been described an example, in which two individual current detectors are provided. Alternatively, three or more individual current detectors may be provided, and in the case where a current value detected by each individual current detector is substantially zero, a current value detected by the individual current detector other than the individual current detector whose detected current value is substantially zero may be used as an individual current value.

Further, the embodiment is not limited to the arrangement that the entire current detector AA, the first individual current detector Axi, the second individual current detector Ayi, and the available battery number estimator 101 constitute an available battery number detecting section. For instance, the available battery number may be calculated by detecting an internal resistance of a battery block BB constituted of parallel-connected secondary batteries B, and based on a varied amount of the internal resistance, taking into account a characteristic that the internal resistance is increased resulting from melting down of a fuse F. In the case where one of the n parallel-connected secondary batteries B in the battery block BB, whose internal resistance value is Ri, is disconnected by cutting off of a fuse F, the varied amount of the internal resistance value is smaller than Ri/n.

In contrast, in the available battery number detecting section constituted of the entire current detector AA, the first individual current detector Axi, the second individual current detector Ayi, and the available battery number estimator 101 shown in FIG. 1, the varied amounts of the first individual current value $I_{Axi}$, the second individual current value $I_{Ayi}$ in the case where one of the n parallel-connected secondary batteries B is disconnected by cutting off a fuse F is respectively $I_{Axi}/n$, $I_{Ayi}/n$. Thus, the obtained varied amount of a detected current value relative to the number of disconnected secondary batteries becomes larger than the varied amount based on the internal resistance value. Accordingly, the arrangement of the embodiment is preferable in the aspect of enhancing the calculation precision of the available battery number ENi, based on the varied amount of a detected current value relative to the number of disconnected batteries.

Further, in this embodiment, the charging and discharging controller 21 is provided in the external device 2, and the charging and discharging controller 21 controls a charging/discharging current value by transmitting the current limit value Iu to the battery power source device 1 via the communicator 11. Alternatively, for instance, the battery power source device 1 may be provided with the charging and discharging controller 21. In the modification, the charging and discharging controller 21 corresponds to an example of a current controlling section.

(Second Embodiment)

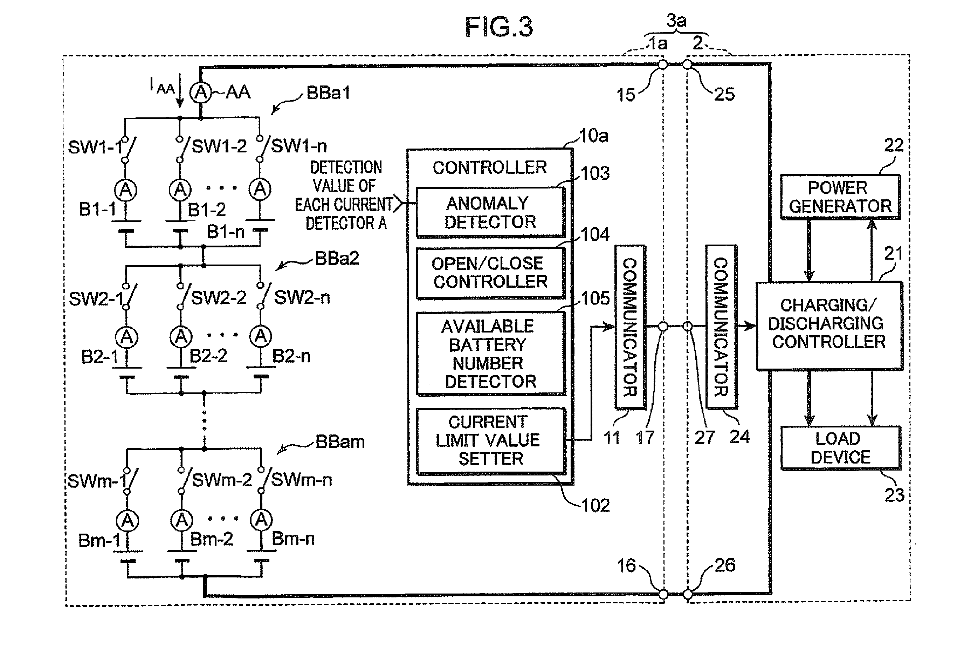

In this section, a battery power source system 3a as the second embodiment of the invention is described. FIG. 3 is a block diagram showing an example of a configuration of the battery power source system 3a as the second embodiment of the invention. The battery power source system 3a shown in FIG. 3 is different from the battery power source system 3 shown in FIG. 1 in the arrangement of a battery power source device 1a as follows.

The battery power source device 1a shown in FIG. 3 is provided with a battery block BBa, in place of the battery block BB in the battery power source device 1, and is provided with a controller 10a, in place of the controller 10. The battery block BBa is provided with switching elements SW in place of the fuses F in the battery block BB. The switching element SW is a switching element such as an FET (Field Effect Transistor) or a relay switch.

Further, a current detector A configured in the same manner as the first individual current detector Axi is series-connected to all the secondary batteries B included in the battery block BBa so that a current value of a current flowing through each secondary battery B is detectable.

The controller 10a is provided with an anomaly detector 103, an open/close controller 104, and an available battery number detector 105, in place of the available battery number estimator 101 in the controller 10.

If a current value detected by each current detector A has exceeded a predetermined anomaly determination value as a current value representing an overcurrent condition, for instance, the anomaly detector 103 determines that anomaly has occurred in a secondary battery B which is series-connected to the current detector A that has detected the current value.

The anomaly detector 103 is not limited to an example, wherein anomaly is detected based on a current value of a current flowing through each secondary battery B. For instance, each battery block BBa may be provided with a temperature sensor for detecting a temperature of each secondary battery B, in place of each current detector A, and the anomaly detector 103 may be configured such that in the case where the temperature detected by each temperature sensor has exceeded a predetermined anomaly determination value, the anomaly detector 103 may determine that anomaly has occurred in a secondary battery B which is series-connected to the temperature sensor that has detected the temperature.

The open/close controller 104 turns off (opens) the switching element SW which is series-connected to a secondary battery B whose anomaly is detected by the anomaly detector 103. Further, the open/close controller 104 transmits, to the available battery number detector 105, switching element information representing an on/off state of each switching element SW.

The available battery number detector 105 detects the number of switching elements which are closed by the open/close controller 104, out of the switching elements SW included in each battery block B, as the available battery number, based on the switching element information transmitted from the open/close controller 104.

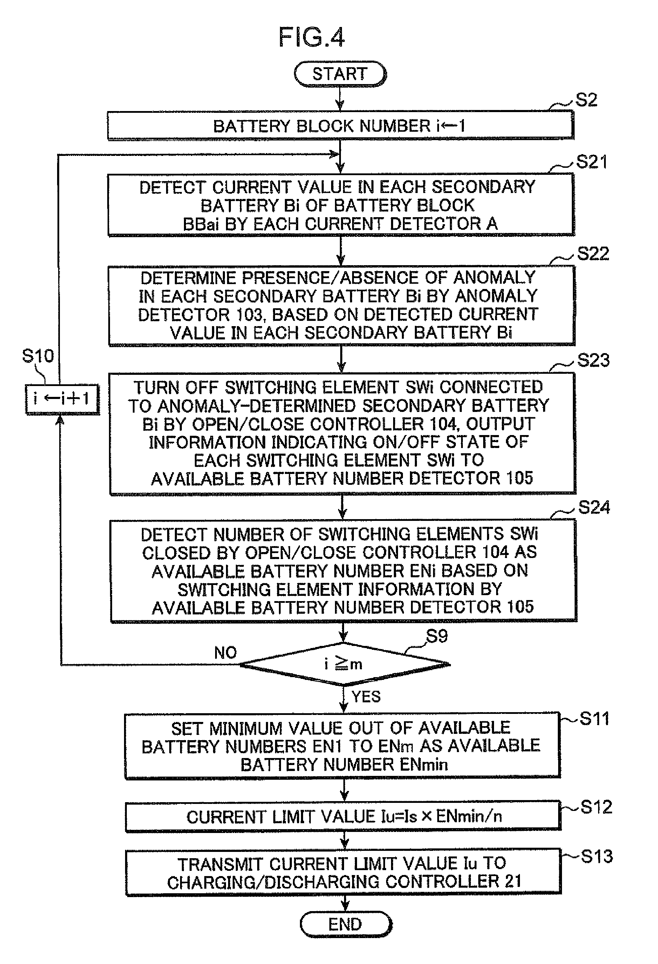

Since the arrangement of the battery power source system 3a other than the above is the same as the arrangement of the battery power source system 3 shown in FIG. 1, description thereof is omitted herein. In the following, an operation to be performed by the battery power source device 1a shown in FIG. 3 is described. FIG. 4 is a flowchart showing an example of an operation to be performed by the battery power source device 1a shown in FIG. 3. In FIG. 4, the same operations as the operations in the flowchart of FIG. 2 are attached with the same step numbers, and description thereof is omitted herein.

Firstly, the anomaly detector 103 substitutes 1 into the variable i representing the ordinal number of the battery block BBa (Step S2). Then, each current detector A detects a current value of a current flowing through each secondary battery Bi included in the battery block BBai. Then, the detected current value is converted into a digital value by e.g. an analog-to-digital converter, and the digital value is acquired by the anomaly detector 103 (Step S21).

Then, the anomaly detector 103 compares between the current value of the current flowing through each secondary battery Bi acquired by the above process, and the anomaly determination value, and determines a secondary battery Bi whose detected current value is not larger than the anomaly determination value, as a non-anomalous battery, and determines a secondary battery Bi whose detected current value is larger than the anomaly determination value, as an anomalous battery (Step S22).

Next, the open/close controller 104 turns off the switching element SWi connected to the secondary battery Bi which is determined to be anomalous by the anomaly detector 103. Then, the open/close controller 104 outputs, to the available battery number detector 105, switching element information representing an on/off state of each switching element SWi (Step S23).

Next, the available battery number detector 105 detects the number of switching elements that are turned on (closed) by the open/close controller 104, out of the switching elements SWi in the battery block BBai, based on the switching element information, as the available battery number ENi (Step S24).

As described above, cutting off a current flowing through a secondary battery B whose anomaly has been detected by using switching elements whose on/off states are controllable as cut-off elements, and by controlling the on/off state of each switching element by using the open/close controller 104, enables to acquire the available battery number ENi, using the control information (switching element information) transmitted from the open/close controller 104.

Next, the available battery number detector 105 compares between the variable i and the battery block number m (Step S9). If the variable i is smaller than the battery block number m (NO in Step S9), the variable i is incremented by one to calculate the available battery number ENi for the next battery block BBa (Step S10), and Steps S21 to S24 are repeated.

Then, if the variable i is equal to or larger than the battery block number m (YES in Step S9), the determination result means that the available battery numbers EN1 to ENm have been calculated for all the battery blocks BBa. Then, the routine proceeds to Step S11. Since the operations of Steps S11 to S13 are the same as the operations of Steps S11 to S13 of the flowchart shown in FIG. 2, description thereof is omitted herein.

A battery power source device according to an aspect of the invention includes a battery block configured by parallel-connecting a plurality of series-circuits each constituted of a secondary battery, and a cut-off element which is operable to be in a cut-off state where a charging and discharging path of the secondary battery is cut off; a current limit value setting section which sets a current limit value representing an upper allowable limit of an entire current value as a current value of a current flowing through the battery block; and an available battery number detecting section which detects the number of cut-off elements which are not in the cut-off state, out of the plurality of cut-off elements included in the battery block, as the available battery number. In this arrangement, the current limit value setting section sets the current limit value so that the current limit value is decreased, as the available battery number detected by the available battery number detecting section is reduced.

With the above arrangement, a cut-off element for cutting off a charging and discharging path is series-connected to each of the parallel-connected secondary batteries. Accordingly, in the case where anomaly has occurred in a part of the secondary batteries included in the battery block, it is possible to cut off a charging and discharging path of only the part of the secondary batteries in which anomaly has occurred by the cut-off element(s) to thereby suppress degradation of the part of the secondary batteries in which anomaly has occurred, without prohibiting charging and discharging of the battery power source device itself.

If a part of the out-off elements is set to a cut-off state, a current that has flowed through a secondary battery or batteries before the cut-offoperation is distributed to the rest of the secondary batteries whose charging and discharging path has not been cut off. This increases a current flowing through the rest of the secondary batteries whose charging and discharging path has not been cut off. In the above arrangement, if none of the cut-off elements is cut off, and charging and discharging of the battery power source device is performer based on a current limit value representing the allowable upper limit of a current flowing through the battery block, a current flowing through the rest of the secondary batteries whose charging and discharging path has not been cut off may exceed the allowable current value solely by a secondary battery, even if the current value of each battery block is not larger than the current limit value, in other words, lies within the allowable range. This may degrade the secondary batteries.

In view of the above, the inventive battery power source device is configured such that the available battery number detecting section detects the number of cut-off elements which are not in a cut-off state, out of the plurality of cut-off elements included in the battery block, as the available battery number. Then, the current limit value setting section sets the current limit value so that the current limit value is decreased, as the available battery number is reduced. By performing the above operation, in the case where a part of the cut-off elements are brought to a cut-off state, the available battery number is reduced, and the current limit value is resultantly decreased. Accordingly, performing charging and discharging of the battery power source device based on the current limit value enables to decrease the current flowing through the rest of the secondary batteries whose charging and discharging path has not been cut off This makes it easy to suppress degradation of the rest of the secondary batteries which have not been cut off.

Preferably, the current limit value setting section may set, as the current limit value, a value obtained by multiplying a standard current limit value with an available battery ratio, the standard current limit value being an upper allowable limit of the entire current value in the case where all the cut-off elements included in the battery block are not in the cut-off state, and the available battery ratio being a ratio of the available battery number to the number of secondary batteries included in the battery black.

With the above arrangement, preventing the current value of a current flowing through the battery block from exceeding the limit currant value set by the current limit value setting section enables to suppress the current value of the current flowing through the battery block from exceeding the current value of a current which is distributed and flows through each of the secondary batteries in response to application of a current of the standard current limit value to the battery block in which none of the cut-off elements is in a cut-off state, i.e. the allowable current value for each of the secondary batteries. This makes it easy to suppress degradation of the secondary batteries.

Preferably, the available battery number detecting section may include an entire current detector which detects the entire current value; a first individual current detector which detects a first individual current value representing a current value of a current flowing through one of the plurality of secondary batteries included in the battery block; and an available battery number estimator which estimates the available battery number, based on the entire current value detected by the entire current detector and an individual current value, the individual current value being the first individual current value detected by the first individual current detector.

With the above arrangement, the first individual current detector detects the current value of a current flowing through one of the plurality of secondary batteries included in the battery block, as the first individual current value. The first individual current value is a value obtained by distributing the current of the entire current value detected by the entire current detector for the available secondary batteries which have not been cut off. Then, a part of the cut-off elements is cut off, and the first individual current value is increased, as the available battery number is decreased. Thus, the available battery number estimator can estimate the available battery number, based on the entire current value and the first individual current value.

Preferably, the first individual current detector may be constituted of a hall element.

The first individual current detector is connected to one of the plurality of secondary batteries included in the battery block. Accordingly, if a voltage loss (voltage drop) by the first individual current detector is large, a difference in the applied voltage and the charging current is generated between a secondary battery connected to the first individual current detector and the other one of the secondary batteries, which may result in a non-uniform a state of each of the secondary batteries. However, use of a hall element having a property that a voltage loss is extremely small as that of the first individual current detector is advantageous in suppressing the difference in the applied voltage and the charging current between a secondary battery connected to the first individual current detector and the other secondary batteries. Thus, the above arrangement enables to reduce likelihood that the state of each of the secondary batteries may be made non-uniform.

Preferably, the available battery number detecting section may further include a second individual current detector which detects a second individual current value representing a current value of a current flowing through one of the secondary batteries other than the secondary battery whose current is detected by the first individual current detector, out of the plurality of secondary batteries included in the battery block, and the available battery number estimator may estimate the available battery number, based on the entire current value detected by the entire current detector and an individual current value, the individual current value being the second individual current value detected by the second individual current detector, in the case where the first individual current value detected by the first individual current detector is substantially zero.

If a cut-off element which is series-cormected to a secondary battery connected to the fist individual current detector is cut off, the first individual current value becomes zero. As a result, it is impossible to estimate the available battery number based on the first individual current value. In view of the above, the available battery number estimator uses the second individual current value detected by the second individual current detector as the individual current value, in the case where the first individual current value detected by the first individual current detector is substantially zero. This enables to estimate the available battery number, based on the entire current value detected by the entire current detector and the individual current value, even if a cut-off element which is series-connected to a secondary battery connected to the first individual current detector is cut off.

Preferably, the available battery number estimator may estimate the available battery number by dividing the entire current value with the individual current value.

With the above arrangement, the available battery number detecting section estimates the available battery number by a simple calculation of dividing the entire current value with the individual current value. This enables to configure the available battery number detecting section with a simplified arrangement.

Preferably, the cut-off element may be a switching element which is operable to be opened and closed, the battery power source device may further include an anomaly detector which detects anomaly of each of the secondary batteries, and an open/close controller which opens a switching element series-connected to a secondary battery whose anomaly has been detected by the anomaly detector, and the available battery number detecting section may detect the number of switching elements closed by the open/close controller, out of the plurality of switching elements included in the battery block, as the available battery number.

With the above arrangement, the switching element which is series-connected to a secondary battery in which anomaly has been detected by the anomaly detector is turned off by the open/close controller, thereby protecting the secondary battery. In this arrangement, since the open/close state of the switching element is determined based on the control contents of the switching element by the open/close controller, the available battery number detecting section can detect the number of switching elements which are closed by the open/close controller, out of the plurality of switching elements included in the battery block, as the available battery number. This makes it easy to detect the available battery number.

Preferably, each of the cut-off elements may be a protecting element which is set to the cut-off state in the case where anomaly has occurred in a secondary battery series-connected to each of the cut-off elements.

With the above arrangement, since each of the secondary batteries is protected by each of the protecting elements, it is possible to protect the secondary batteries with a simplified arrangement even in the absence of the aforementioned anomaly detector and open/close controller.

Preferably, a plurality of the battery blocks may be series-connected to each other, the available battery number detecting section may detect the number of cut-off elements which are not in the cut-off state, out of the plurality of cut-off elements included in each of the battery blocks, as the individual available battery number of each of the battery blocks, and the current limit value setting section may set a minimum value out of a plurality of the individual available battery numbers detected by the available battery number detecting section, as the available battery number.

With the above arrangement, in the case where a plurality of battery blocks each constituted of parallel-connected secondary batteries are series-connected, it is possible to set the current limit value so that the current value of a current flowing through a targeted one of the battery blocks whose available battery number is smallest among the battery blocks, and accordingly, whose distributed current flowing through each one of the secondary batteries of the targeted battery block becomes largest, does not exceed the allowable current value of each secondary battery.

Preferably, the battery source device may further include a current controlling section which controls the current flowing through the battery block so that the entire current value does not exceed the current limit value set by the current limit value setting section.

With the above arrangement, the current controlling section controls the current flowing through the battery block not to exceed the current limit value set by the current limit value setting section. As a result, even if a part of the cut-off elements is cut aff, it is possible to suppress an increase in the current flowing through the rest of the secondary batteries which have not been cut off. This enables to suppress degradation of the secondary batteries.

Preferably, the current controlling section may transmit the current limit value set by the current limit value setting section to an external device which charges and discharge the battery block to thereby cause the external device to control so that the current value of the current flowing through the battery block does not exceed the current limit value.

With the above arrangement, even if charging and discharging of the battery block is controlled by the external device disposed outside of the battery power source device, the current controlling section transmits the current limit value to the external device, whereby the external device controls the current flowing through the battery block not to exceed the current limit value. Accordingly, even if a part of the cut-off elements is cut off, it is possible to suppress an increase in the current flowing through the rest of the secondary batteries which have not been cut off. This enables to suppress degradation of the secondary batteries.

A battery power source system according to another aspect of the invention includes the battery power source device having any one of the above arrangements, and an external device which charges and discharges the battery power source device. In this arrangement, the external device includes a load circuit which accepts supply of a discharging current from the battery block; a current supplying section which supplies a charging current to the battery block; and a charging and discharging control section which adjusts the discharging current to be supplied from the battery block to the load circuit, and the charging currant to be supplied from the current supplying section to the battery block so that the current value of the current flowing through the battery block does not exceed the current limit value transmitted from the current controlling section.

With the above arrangement, the battery power source system provided with the aforementioned battery power source device, a load circuit which accepts supply of a discharging current from the battery block of the battery power source device, and a current supplying section which supplies a charging current to the battery block enables to suppress degradation of the secondary batteries, without prohibiting charging and discharging of the entirety of the battery power source device, even if anomaly has occurred in a part of the secondary batteries included in the battery block.

The battery power source device having the above arrangement, and the battery power source system incorporated with the battery power source device are configured such that a cut-off element for cutting off a charging and discharging path is series-connected to each of the parallel-connected secondary batteries. Accordingly, in the case where anomaly has occurred in a part of the secondary batteries included in the battery block, it is possible to cut off a charging and discharging path of the part of the secondary batteries in which anomaly has occurred by the cut-off element (s), whereby degradation of the part of the secondary batteries in which anomaly has occurred can be suppressed, without prohibiting charging and discharging of the battery power source device itself

Further, the available battery number detecting section detects the number of cut-off elements which have not been cut off, out of the plurality of cut-off elements included in the battery block, as the available battery number. Then, the current limit value setting section sets the current limit value in such a manner that the current limit value is decreased, as the available battery number is reduced. By performing the above operation, in the case where a part of the cut-off elements is cut off, the available battery number is reduced, and the current limit value is decreased. Accordingly, performing charging and discharging of the battery power source device based on the current limit value enables to decrease the current flowing through the rest of the secondary batteries which have not been cut off. This makes it easy to suppress degradation of the rest of the secondary batteries which have not been cut off

This application claims priority to Japanese Patent Application No. 2009-255000, filed on November 6, 2009, the contents of which are hereby incorporated by reference into the present application.

The embodiments or the examples described in the detailed description of the invention are provided to clarify the technical contents of the invention. The invention should not be construed to be limited to the embodiments or the examples. The invention may be modified in various ways as far as such modifications do not depart from the spirit and the scope of the invention hereinafter defined.

**INDUSTRIAL APPLICABILITY**

The battery power source device and the battery power source system incorporated with the battery power source device of the invention are suitably usable as an electronic apparatus such as a portable personal computer, a digital camera or a portable phone; a vehicle such as an electric-powered vehicle or a hybrid vehicle; a hybrid elevator; a power source system configured by combining a photovoltaic battery or a power generator, and secondary batteries; a battery-loaded device or a battery-loaded system such as an uniterruptible power supply (UPS) device.

**Claims**

1. A battery power source device, comprising:

a battery block configured by parallel-connecting a plurality of series-circuits each constituted of a secondary battery, and a cut-off element which is operable to be in a cut-off state where a charging and discharging path of the secondary battery is cut off;
a current limit value setting section which sets a current limit value representing an upper allowable limit of an entire current value as a current value of a current flowing through the battery block; and
an available battery number detecting section which detects the number of cut-off elements which are not in the cut-off state, out of the plurality of cut-off elements included in the battery block, as the available battery number, wherein
the current limit value setting section sets the current limit value so that the current limit value is decreased, as the available battery number detected by the available battery number detecting section is reduced.

2. The battery power source device according to claim 1, wherein
the current limit value setting section sets, as the current limit value, a value obtained by multiplying a standard current limit value with an available battery ratio, the standard current limit value being an upper allowable limit of the entire current value in the case where all the cut-off elements included in the battery block are not in the cut-off state, and the available battery ratio being a ratio of the available battery number to the number of secondary batteries included in the battery block.

3. The battery power source device according to claim 1 or claim 2, wherein
the available battery number detecting section includes:

an entire current detector which detects the entire current value;
a first individual current detector which detects a first individual current value representing a current value of a current flowing through one of the plurality of secondary batteries included in the battery block; and
an available battery number estimator which estimates the available battery number, based on the entire current value detected by the entire current detector and an individual current value, the individual current value being the first individual current value detected by the first individual current detector.

4. The battery power source device according to claim 3, wherein
the first individual current detector is constituted of a hall element

5. The battery power source device according to claim 3 or claim 4, wherein
the available battery number detecting section further includes a second individual current detector which detects a second individual current value representing a current value of a current flowing through one of the secondary batteries other than the secondary battery whose current is detected by the first individual current detector, out of the plurality of secondary batteries included in the battery block, and
the available battery number estimator estimates the available battery number, based on the entire current value detected by the entire current detector and an individual current value, the individual current value being the second individual current value detected by the second individual current detector, in the case where the first individual current value detected by the first individual current detector is substantially zero.

6. The battery power source device according to any one of claims 3 through 5, wherein
the available battery number estimator estimates the available battery number by dividing the entire current value with the individual current value.

7. The battery power source device according to claim 1 or claim 2, wherein
the cut-off element is a switching element which is operable to be opened and closed,
the battery power source device further comprises
an anomaly detector which detects anomaly of each of the secondary batteries, and
an open/close controller which opens a switching element series-connected to a secondary battery whose anomaly has been detected by the anomaly detector, and
the available battery number detecting section detects the number of switching elements closed by the open/close controller, out of the plurality of switching elements included in the battery block, as the available battery number.

8. The battery power source device according to any one af claims 1 through 6, wherein
each of the cut-off elements is a protecting element which is set to the cut-off state in the case where anomaly has occurred in a secondary battery series-connected to each of the cut-off elements.

9. The battery power source device according to any one of claims 1 through 8, wherein a plurality of the battery blocks are series-connected to each other,
the available battery number detecting section detects the number of cut-off elements which are not in the cut-off state, out of the plurality of cut-off elements included in each of the battery blocks, as the individual available battery number of each of the battery blocks, and
the current limit value setting section sets a minimum value out of a plurality of the individual available battery numbers detected by the available battery number detecting section, as the available battery number.

**10.** The battery power source device according to any one of claims 1 through 9, further comprising a current controlling section which controls the current flowing through the battery block so that the entire current value does not exceed the current limit value set by the current limit value setting section.

**11.** The battery power source device according to claim 10, wherein the current controlling section transmits the current limit value set by the current limit value setting section to an external device which charges and discharge the battery block to thereby cause the external device to control so that the current value of the current flowing through the battery block does not exceed the current limit value.

**12.** A battery power source system, comprising:

the battery power source device of any one of claims 1 through 11; and an external device which charges and discharges the battery power source device, wherein the external device includes:

a load circuit which accepts supply of a discharging current from the battery block; a current supplying section which supplies a charging current to the battery block; and a charging and discharging control section which adjusts the discharging current to be supplied from the battery block to the load circuit, and the charging current to be supplied from the current supplying section to the battery block so that a current value of the current flowing through the battery block does not exceed the current limit value transmitted from the current controlling section.

# FIG.1

EP 2 385 575 A1

# FIG.2

START

DETECT ENTIRE CURRENT VALUE $I_{AA}$ BY ENTIRE CURRENT DETECTOR AA ~S1

BATTERY BLOCK NUMBER $i \leftarrow 1$ ~S2

DETECT FIRST INDIVIDUAL CURRENT VALUE $I_{Axi}$ BY FIRST INDIVIDUAL CURRENT DETECTOR Axi ~S3

$I_{Axi} >$ THRESHOLD VALUE Iz ? ~S4

NO → DETECT SECOND INDIVIDUAL CURRENT VALUE $I_{Ayi}$ BY SECOND INDIVIDUAL CURRENT DETECTOR Ayi ~S6

YES

INDIVIDUAL CURRENT VALUE $I_{Ai} \leftarrow$ FIRST INDIVIDUAL CURRENT VALUE $I_{Axi}$ ~S5

INDIVIDUAL CURRENT VALUE $I_{Ai} \leftarrow$ SECOND INDIVIDUAL CURRENT VALUE $I_{Ayi}$ ~S7

$i \leftarrow i+1$ ~S10

AVAILABLE BATTERY NUMBER $ENi = I_{AA}/I_{Ai}$ ~S8

$i \geq m$ ~S9

NO

YES

SET MINIMUM VALUE OUT OF AVAILABLE BATTERY NUMBERS EN1 TO ENm AS AVAILABLE BATTERY NUMBER ENmin ~S11

CURRENT LIMIT VALUE $Iu = Is \times ENmin/n$ ~S12

TRANSMIT CURRENT LIMIT VALUE Iu TO CHARGING/DISCHARGING CONTROLLER 21 ~S13

END

FIG.3

# FIG.4

START

BATTERY BLOCK NUMBER i←1 ~S2

DETECT CURRENT VALUE IN EACH SECONDARY
BATTERY Bi OF BATTERY BLOCK
BBai BY EACH CURRENT DETECTOR A ~S21

DETERMINE PRESENCE/ABSENCE OF ANOMALY
IN EACH SECONDARY BATTERY Bi BY ANOMALY
DETECTOR 103, BASED ON DETECTED CURRENT
VALUE IN EACH SECONDARY BATTERY Bi ~S22

TURN OFF SWITCHING ELEMENT SWi CONNECTED
TO ANOMALY-DETERMINED SECONDARY BATTERY
Bi BY OPEN/CLOSE CONTROLLER 104, OUTPUT
INFORMATION INDICATING ON/OFF STATE OF
EACH SWITCHING ELEMENT SWi TO
AVAILABLE BATTERY NUMBER DETECTOR 105 ~S23

DETECT NUMBER OF SWITCHING ELEMENTS SWi
CLOSED BY OPEN/CLOSE CONTROLLER 104 AS
AVAILABLE BATTERY NUMBER ENi BASED ON
SWITCHING ELEMENT INFORMATION BY
AVAILABLE BATTERY NUMBER DETECTOR 105 ~S24

S10
$i \leftarrow i+1$

NO ◇ $i \geqq m$ ~S9

YES

SET MINIMUM VALUE OUT OF AVAILABLE
BATTERY NUMBERS EN1 TO ENm AS AVAILABLE
BATTERY NUMBER ENmin ~S11

CURRENT LIMIT VALUE $Iu = Is \times ENmin/n$ ~S12

TRANSMIT CURRENT LIMIT VALUE Iu TO
CHARGING/DISCHARGING CONTROLLER 21 ~S13

END

## INTERNATIONAL SEARCH REPORT

| International application No. |
| --- |
| PCT/JP2010/006205 |

A.  CLASSIFICATION OF SUBJECT MATTER
*H01M10/44*(2006.01)i, *H01M10/42*(2006.01)i, *H02J7/00*(2006.01)i, *H02J7/02*
(2006.01)i

According to International Patent Classification (IPC) or to both national classification and IPC

B.  FIELDS SEARCHED

Minimum documentation searched (classification system followed by classification symbols)
H01M10/44, H01M10/42, H02J7/00, H02J7/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | JP 2007-282375 A  (Hitachi Vehicle Energy, Ltd.),<br>25 October 2007 (25.10.2007),<br>paragraphs [0028] to [0029]; fig. 1, 4<br>& US 2007/0247106 A1 | 1,2,7-12<br>3-6 |
| P,X | JP 2010-088202 A  (Toshiba Corp.),<br>15 April 2010 (15.04.2010),<br>fig. 2, 6, 12, 15<br>& US 2010/0079108 A1     & CN 101714649 A | 1,2,7-12 |

☐  Further documents are listed in the continuation of Box C.          ☐  See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 17 December, 2010 (17.12.10) | 28 December, 2010 (28.12.10) |

| Name and mailing address of the ISA/<br>Japanese Patent Office | Authorized officer |
| --- | --- |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008027658 A
- JP 2008071568 A
- JP 2009255000 A